# EUROPEAN PATENT SPECIFICATION

(11) **EP 3 421 870 B1**
(45) Date of publication and mention of the grant of the patent: **19.08.2020**
(21) Application number: 18173817.0
(22) Date of filing: 23.05.2018
(51) Int. Cl.: F21S 8/00, F21S 8/06, H02G 3/00

(54) **CEILING-MOUNTED AND WALL-MOUNTED DUAL-PURPOSE LAMP KIT AND INSTALLATION METHODS OF THE LAMPS**
DECKENMONTIERTE UND WANDMONTIERTE LAMPEN KIT MIT DOPPELTEM ZWECK UND INSTALLATIONSVERFAHREN DAFÜR
KIT DE LAMPES À DOUBLE USAGE À MONTAGE AU PLAFOND ET À MONTAGE MURAL ET LEURS PROCÉDÉS D'INSTALLATION

(30) Priority: 26.06.2017 CN 201710496269; 26.06.2017 CN 201720750299 U
(43) Date of publication of application: 02.01.2019
(73) Proprietor: Ningbo Ganpe Photoelectric Technology Co., Ltd., 315000 Ningbo, Zhejiang (CN)
(72) Inventor: YU, Xiangjun, Ningbo, Zhejiang 315000 (CN); XU, Guangrong, Ningbo, Zhejiang 315000 (CN)
(74) Representative: Elzaburu S.L.P.

(56) References cited:
- DE-U1- 29 513 723
- US-A1- 2004 184 264
- US-A1- 2014 126 190

## Description

### Technical field

The present invention relates to a ceiling-mounted and wall-mounted dual-purpose lamp kit and installation methods thereof.

### Background

At present, printed circuit board (PCB) lamps are either fixed on the wall or fixed on the ceiling. Therefore, for different fixing methods, the lamps also have two different structures. Users should purchase the lamps according to their own needs. However, if the fixing methods are to be replaced later, the lamps must be replaced accordingly, which leads to waste of materials. In addition, the current installation methods are very troublesome. Professional workers are required for the installation, which also result in the increase of cost.

For example, the invention with Chinese Patent Application No. 201610069903.4 entitled "INSTALLATION STRUCTURE APPLIED TO LAMPS AND INSTALLATION METHOD THEREOF" discloses an installation structure applied to lamps and an installation method thereof. The installation structure includes a lamp, a junction box and a connecting piece thereof. The junction box is disposed outside the lamp, the connecting piece is provided with a locking part which is provided with an annularly-distributed adjusting groove, the junction box is provided with a threaded hole locked and matched with the adjusting groove, the two sides of the locking part are bent outwards to form clamping parts, and a lamp body of the lamp is provided with clamping grooves for the clamping parts to be clamped. In this invention, first the connecting piece is connected with the junction box, and then the lamp and the connecting piece are clamped and connected to achieve the installation and connection of the lamp and the junction box, which makes the installation and disassembly of the lamp simpler and more convenient, reduces the wear of the lamp, and ensures the service life of the lamp. The locking part is provided with the adjusting groove which is installed and matched with the junction box, so that the installation direction of the connecting piece can be changed. As a result, the installation direction of the lamp can be changed to meet the installation requirements of different users, and the applicability is higher. However, the lamp is only suitable for being mounted and cannot be mounted on the ceiling, and thus the lamp has certain limitations.

US 2014/0126190 A1 discloses a lamp which can be mounted on a wall or a ceiling by means of a suspension mechanism.

In view of this, the inventor has specifically designed a ceiling-mounted and wall-mounted dual-purpose lamp kit and installation methods thereof. The lamp can be mounted on a wall or a ceiling, can be switched at will, and can be conveniently installed to meet consumer demands.

### Summary

Against the aforementioned current situation of the prior art, against the technical problem to be solved, the present invention provides a ceiling-mounted and wall-mounted dual-purpose lamp kit which can be conveniently switched on a wall and a ceiling, and is convenient to install.

The technical solution adopted to solve the aforementioned technical problem by the present invention is as follows: a ceiling-mounted and wall-mounted dual-purpose lamp kit, including a light-emitting component, an installation bottom box, a suspension wire mounting box and a wall mounting box. The light-emitting component includes a lampshade. A PCB, a control board and a lamp holder are sequentially arranged in the lampshade. The two sides of the top end of the lampshade are provided with a threaded hole fixed to the wall mounting box and the suspension wire mounting box and an electrical port electrically connected with the suspension wire mounting box and the wall mounting box, respectively.

A binding post is disposed in the installation bottom box and electrically connected with a driving device, the driving device is fixed on the installation bottom box through a driving cover, the two ends of the installation bottom box are provided with through holes fixed to the wall, and long screws are fixed on the two sides of the installation bottom box and used for mounting the wall mounting box or the suspension wire mounting box.

Preferably, the two sides of the wall mounting box are correspondingly provided with four L-shaped openings, and the installation bottom box is fixed on the wall mounting box through the long screws and the L-shaped openings; the bottom of the wall mounting box is provided with a mounting hole corresponding to the threaded hole in the top of the lampshade and an opening corresponding to the electrical port positioned at the top of the lampshade, and the driving device in the installation bottom box is electrically connected with the control board in the lampshade through the opening.

Preferably, the two sides of the suspension wire mounting box are correspondingly provided with four L-shaped openings, and the installation bottom box is fixed on the suspension wire mounting box through the long screws and the L-shaped openings; connecting lines are fixed on the two sides of the suspension wire mounting box, the other end of each connecting line is fixed on the threaded hole in the top of the lampshade through a connector; a wiring board is further mounted in the suspension wire mounting box, one end of the wiring board is connected with the driving device, and the other end of the wiring board is connected with the control board in the lampshade.

Preferably, the wiring board is a male-female wiring terminal.

Preferably, the connector includes a wire clamp, a steel wire rope and a connecting fitting.

Preferably, a dust ring is fixed on the electrical port disposed at the top of the lampshade.

A method for installing a ceiling-mounted and wall-mounted dual-purpose lamp kit on a wall includes the following steps:
step a of tightening an installation bottom box on the wall through a through hole by using a screw;
step b of fixing a wall mounting box to a light-emitting component through a screw;
step c of finally adjusting long screws of the installation bottom box, clamping L-shaped openings disposed on the wall mounting box onto the long screws of the installation bottom box to complete the connection between the wall mounting box and the installation bottom box.

A method for installing a ceiling-mounted and wall-mounted dual-purpose lamp kit on a ceiling includes the following steps:
step a of tightening an installation bottom box on the ceiling through a through hole by using a screw;
step b of fixing a suspension wire mounting box to a light-emitting component through a steel wire rope, a wire clamp and a connecting fitting;
step c of finally adjusting long screws of the installation bottom box, clamping L-shaped openings disposed on the wall mounting box onto the long screws of the installation bottom box to complete the connection between the suspension wire mounting box and the installation bottom box.

Compared with the prior art, the present invention has the advantages that the light-emitting component in the present invention can be mounted on a wall through the wall mounting box, and can also be mounted on a ceiling through the suspension wire mounting box, and the installation methods are diversified; no matter which installation method is adopted, the installation process is very simple, users only need to fix the installation bottom box to the wall or the ceiling and only need to tighten other components through screws, and no professional engineering worker is required for the installation; the installation cost is reduced, and the ceiling-mounted and wall-mounted dual-purpose lamp kit is suitable for most of users.

### Brief description of drawings

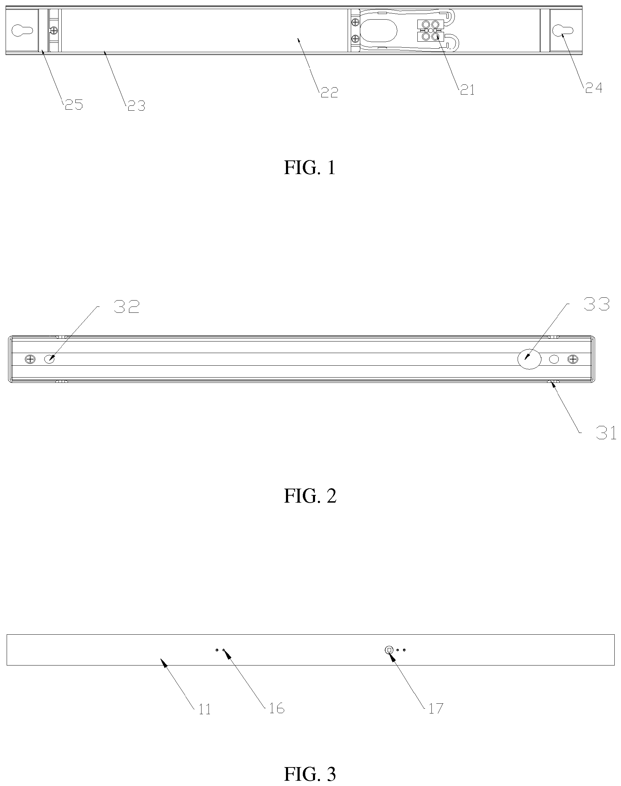

FIG. 1 is a structural schematic diagram of an installation bottom box;
FIG. 2 is a structural schematic diagram of a wall mounting box;
FIG. 3 is a structural schematic diagram of a light-emitting component;

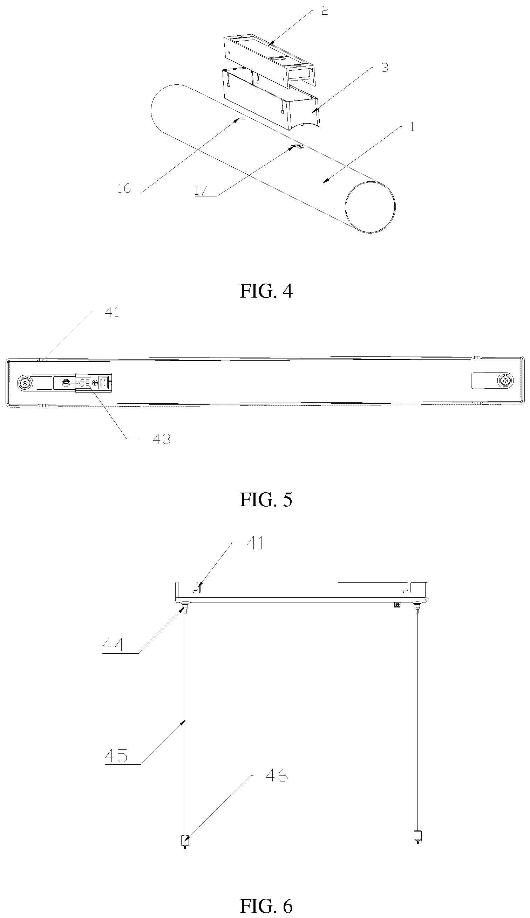

FIG. 4 is an exploded view of a wall installation component;
FIG. 5 is a sectional view of a suspension wire mounting box;
FIG. 6 is a structural view of a suspension wire mounting box; and

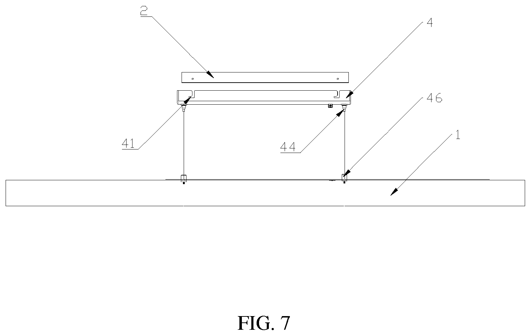

FIG. 7 is an exploded view of a suspension wire mounting component.

### Description of embodiments

### Embodiment 1

A ceiling-mounted and wall-mounted dual-purpose lamp kit includes a light-emitting component 1, an installation bottom box 2, a suspension wire mounting box 4 and a wall mounting box 3. The light-emitting component 1 includes a lampshade 11. A PCB, a control board and a lamp holder are sequentially arranged in the lampshade. The two ends of the lampshade 11 are sealed through seal heads, and the two sides of the top end of the lampshade 11 are provided with a threaded hole 16 fixed to the wall mounting box and the suspension wire mounting box and an electrical port 17 electrically connected with the suspension wire mounting box and the wall mounting box, respectively; a binding post 21 is disposed in the installation bottom box 2 and electrically connected with a driving device 22, the driving device 22 is fixed on the installation bottom box 2 through a driving cover 23, the two ends of the installation bottom box 2 are provided with through holes 24 fixed to the wall, and long screws 25 are fixed on the two sides of the installation bottom box 2 and used for mounting the wall mounting box 3 or the suspension wire mounting box 4. A dust ring 18 is fixed on the electrical port 17 disposed at the top of the lampshade.

The two sides of the wall mounting box 3 are correspondingly provided with four L-shaped openings 31, the installation bottom box 2 is fixed on the wall mounting box 3 through the long screws 25 and the L-shaped openings 31; the bottom of the wall mounting box 3 is provided with a mounting hole 32 corresponding to the threaded hole 16 in the top of the lampshade 11 and an opening 33 corresponding to the electrical port 17 positioned at the top of the lampshade, and the driving device 22 in the installation bottom box is electrically connected with the control board 13 in the lampshade 11 through the opening 33.

The installation bottom box 2 is tightened on the wall through a through hole by using a screw; the wall mounting box 3 is fixed to the light-emitting component 1 through a screw; finally the long screws 25 of the installation bottom box are adjusted to install the L-shaped openings 31 on the wall mounting box onto the long screws 25 of the installation bottom box to complete the connection between the wall mounting box 3 and the installation bottom box 2.

### Embodiment 2

A ceiling-mounted and wall-mounted dual-purpose lamp kit includes a light-emitting component 1, an installation bottom box 2, a suspension wire mounting box 4 and a wall mounting box 3. The light-emitting component 1 includes a lampshade 11. A PCB, a control board and a lamp holder are sequentially arranged in the lampshade 11. The two ends of the lampshade 11 are sealed through seal heads, and the two sides of the top end of the lampshade 11 are provided with a threaded hole 16 fixed to the wall mounting box and the suspension wire mounting box and an electrical port 17 electrically connected with the suspension wire mounting box and the wall mounting box, respectively; a binding post 21 is disposed in the installation bottom box 2 and electrically connected with a driving device 22, the driving device 22 is fixed on the installation bottom box 2 through a driving cover 23, the two ends of the installation bottom box 2 are provided with through holes 24 fixed to the wall, and long screws 25 are fixed on the two sides of the installation bottom box 2 and used for mounting the wall mounting box 3 or the suspension wire mounting box 4. A dust ring 18 is fixed on the electrical port 17 disposed at the top of the lampshade.

The two sides of the suspension wire mounting box 4 are correspondingly provided with four L-shaped openings 41, the installation bottom box 2 is fixed on the suspension wire mounting box 4 through the long screws 25 and the L-shaped openings 41; connecting lines are fixed on the two sides of the suspension wire mounting box 4, the other end of each connecting line is fixed on the threaded hole 16 in the top of the lampshade through a connector; a wiring board 43 is further mounted in the suspension wire mounting box 4, the wiring board 43 is a male-female wiring terminal, one end of the wiring board 43 is connected with the driving device 22, and the other end of the wiring board 43 is connected with the control board 13 in the lampshade. The connector includes a wire clamp 44, a steel wire rope 45 and a connecting fitting 46.

The installation bottom box 2 is tightened on a ceiling through a through hole by using a screw; the suspension wire mounting box 4 is fixed to the light-emitting component 1 through the steel wire rope 45, the wire clamp 44 and the connecting fitting 46; finally the long screws 25 of the installation bottom box are adjusted to install the L-shaped openings 41 on the suspension wire mounting box onto the long screws 25 of the installation bottom box to complete the connection between the suspension wire mounting box 4 and the installation bottom box 2.

## Claims

1. A ceiling-mounted and wall-mounted dual-purpose lamp kit, comprising a light-emitting component (1), an installation bottom box (2), a suspension wire mounting box (4) and a wall mounting box (3), wherein the light-emitting component (1) comprises a lampshade (11); a PCB, a control board and a lamp holder are sequentially arranged in the lampshade (11); the two ends of the lampshade (11) are sealed through seal heads, and the two sides of the top end of the lampshade (11) are provided with a threaded hole (16) fixed to the wall mounting box and the suspension wire mounting box and an electrical port (17) electrically connected with the suspension wire mounting box and the wall mounting box, respectively;
a binding post (21) is disposed in the installation bottom box (2) and electrically connected with a driving device (22), the driving device (22) is fixed on the installation bottom box (2) through a driving cover (23), the two ends of the installation bottom box (2) are provided with through holes (24) fixed to the wall, and long screws (25) are fixed on the two sides of the installation bottom box (2) and used for mounting the wall mounting box (3) or the suspension wire mounting box (4).

2. The ceiling-mounted and wall-mounted dual-purpose lamp kit according to claim 1, wherein the two sides of the wall mounting box (3) are correspondingly provided with four L-shaped openings (31), and the installation bottom box (2) is fixed on the wall mounting box (3) through the long screws (25) and the L-shaped openings (31); the bottom of the wall mounting box (3) is provided with a mounting hole (32) corresponding to the threaded hole (16) in the top of the lampshade (11) and an opening (33) corresponding to the electrical port (17) positioned at the top of the lampshade, and the driving device (22) in the installation bottom box is electrically connected with the control board (13) in the lampshade (11) through the opening (33).

3. The ceiling-mounted and wall-mounted dual-purpose lamp kit according to claim 1, wherein the two sides of the suspension wire mounting box (4) are correspondingly provided with four L-shaped openings (41), the installation bottom box (2) is fixed on the suspension wire mounting box (4) through the long screws (25) and the L-shaped openings (41); connecting lines are fixed on the two sides of the suspension wire mounting box (4), and the other end of each connecting line is fixed on the threaded hole (16) in the top of the lampshade through a connector; a wiring board (43) is further mounted in the suspension wire mounting box (4), one end of the wiring board (43) is connected with the driving device (22), and the other end of the wiring board (43) is connected with the control board (13) in the lampshade.

4. The ceiling-mounted and wall-mounted dual-purpose lamp kit according to claim 1, wherein the wiring board is a male-female wiring terminal.

5. The ceiling-mounted and wall-mounted dual-purpose lamp kit according to claim 3, wherein the connector includes a wire clamp (44), a steel wire rope (45) and a connecting fitting (46).

6. The ceiling-mounted and wall-mounted dual-purpose lamp kit according to claim 1 or 2 or 3 or 4 or 5, wherein a dust ring is fixed on the electrical port (17) disposed at the top of the lampshade.

7. A method for installing a ceiling-mounted and wall-mounted dual-purpose lamp kit according to claims 1-6 on a wall, comprising the following steps:
step a of tightening an installation bottom box (2) on the wall through a through hole by using a screw;
step b of fixing a wall mounting box (3) to a light-emitting component (1) through a screw;
step c of finally adjusting long screws (25) of the installation bottom box, clamping L-shaped openings (31) on the wall mounting box onto the long screws (25) of the installation bottom box to complete the connection between the wall mounting box (3) and the installation bottom box (2).

8. A method for installing a ceiling-mounted and wall-mounted dual-purpose lamp kit according to claims 1-6 on a ceiling, comprising the following steps:
step a of tightening an installation bottom box (2) on the ceiling through a through hole by using a screw;
step b of fixing a suspension wire mounting box (4) to a light-emitting component (1) through a steel wire rope (45), a wire clamp (44) and a connecting fitting (46);
step c of finally adjusting long screws (25) of the installation bottom box, clamping L-shaped openings (41) on the wall mounting box onto the long screws (25) of the installation bottom box to complete the connection between the suspension wire mounting box (4) and the installation bottom box (2).

## Patentansprüche

1. Decken- und Hängelampe mit Doppelverwendungszweck, umfassend eine Lichtemissionskomponente (1), einenMontagebasissockel (2), einen Aufhängungsdraht-Montagekasten (4) und eine Wandmontagekasten (3), **dadurch gekennzeichnet, dass** die Lichtemissionskomponente (1)) einen Lampenschirm (11)umfasst, in diesem LampenschirmeineDruckleiterplatte, eine Steuerplatte und einen Lampenhalter nacheinander vorgesehen sind, wobei zwei Enden des Lampenschirms (11) durch einen Dichtkopf abgedichtet sind und auf zwei Seiten des oberen Endes des Lampenschirms (11) eine Gewindebohrung (16) zum Festverbinden mit dem Wandmontagekasten, dem Aufhängungsdraht-Montagekasten, sowie einen elektrischen Anschluss (17) zum elektrischen Verbinden mit dem Aufhängungsdraht-Montagekasten, dem Wandmontagekasten eingebracht sind;
wobei imMontagebasissockel (2) eine Anschlussklemme (21) vorgesehen ist, diese Anschlussklemme (21) elektrisch mit einer Antriebsvorrichtung (22) verbunden ist, und diese Antriebsvorrichtung (22) über eine Antriebsabdeckung (23) an demMontagebasissockel (2) befestigt ist, wobei an zwei Enden dieses Montagebasissockels (2) eine Durchgangsbohrung (24) zum Befestigen an der Wand eingebracht ist, auf zwei Seiten des Montagebasissockels (2) lange Schrauben (25) zur Anbringen des Wandmontagekastens (3) oder des Aufhängungsdraht-Montagekastens (4) befestigt sind.

2. Decken- und Hängelampe mit Doppelverwendungszweck nach Anspruch 1, **dadurch gekennzeichnet, dass** vier "L"-förmige Öffnungen (31) entsprechend auf beiden Seiten des Wandmontagekastens (3) eingebracht sind, und der Montagebasissockel (2) durch lange Schrauben (25) und "L"-förmige Öffnungen (31) an dem Wandmontagekasten (3) befestigt ist; dass am Boden des Wandmontagekastens (3) eine mit der Gewindebohrung (16) des oberen Endes des Lampenschirms (11) korrespondierende Montagebohrung (32) sowie eine mit dem elektrischen Anschluss (17) des oberen Endes des Lampenschirms korrespondierende Öffnung (33) eingebracht sind, wobei die Antriebsvorrichtung (22) im Montagebasissockeldurch diese Öffnung (33) elektrisch an die Steuerplatte (13)imLampenschirm (33) angeschlossen ist.

3. Decken- und Hängelampe mit Doppelverwendungszweck nach Anspruch 1, **dadurch gekennzeichnet, dass** vier "L"-förmige Öffnungen (41) entsprechend auf beiden Seiten des Aufhängungsdraht-Montagekastens (4) eingebracht sind, und der Montagebasissockel (2) durch lange Schrauben (25) und "L"-förmige Öffnungen (41) an dem Aufhängungsdraht-Montagekasten (4) befestigtist; dassein Verbindungsdraht auf beiden Seiten des Aufhängungsdraht-Montagekastens (4) befestigt ist, und das andere Ende dieses Verbindungsdrahtes durch einen Verbinder an der Gewindebohrung (16) des oberen Endes des Lampenschirms befestigt ist,wobei im Aufhängungsdraht-Montagekasten (4) ferner eineAnschlussplatte (43) angebracht ist, ein Ende der Anschlussplatte (43) mit der Antriebsvorrichtung (22) verbunden ist und das andere Ende derselben mit der Steuerplatte (13) im Lampenschirm verbunden ist.

4. Decken- und Hängelampe mit Doppelverwendungszweck nach Anspruch 3, **dadurch gekennzeichnet, dass** die Anschlussplatte ein Stecker-Buchse-Anschluss ist.

5. Decken- und Hängelampe mit Doppelverwendungszweck nach Anspruch 3, **dadurch gekennzeichnet, dass** der Verbinder eine Drahtklammer (44), ein Stahldrahtseil (45) und ein Verbindungszubehör (46) aufweist.

6. Decken- und Hängelampe mit Doppelverwendungszweck nach Anspruch 1 oder 2 oder 3 oder 4 oder 5, **dadurch gekennzeichnet, dass** ein Staubring am elektrischen Anschluss (17) des oberen Endes des Lampenschirms befestigt ist.

7. Montageverfahren für eine Decken- und Hängelampe mit Doppelverwendungszweck an einer Wand, **dadurch gekennzeichnet**, umfassend folgende Schritte:
a. Festschrauben desMontagebasissockels (2) an der Wand mit Schrauben durch die Durchgangsbohrung;
b. Befestigen des Wandmontagekastens (3) mit Schrauben an der Lichtemissionskomponente (1);
c. Abschließend Einstellen der langen Schraube (25) desMontagebasissockels, Einrasten der an dem Wandmontagekasten befindlichen "L"-förmigen Öffnungen (31) an der langen Schraube (25) des Montagebasissockels und somit Abschließen der Verbindung zwischen dem Wandmontagekasten (3) und dem Montagebasissockel (2).

8. Montageverfahren für eine Decken- und Hängelampe mit Doppelverwendungszweck an einer Deckenaufhängung, **dadurch gekennzeichnet**, umfassend folgende Schritte:
a. Festschrauben desMontagebasissockels (2) an der Decke mit Schrauben durch die Durchgangsbohrung;
b. Befestigen des Aufhängungsdraht-Montagekastens (4) mit dem Stahldrahtseil (45),der Drahtklammer (44) und dem Verbindungszubehör (46) an der Lichtemissionskomponente (1);
c. Abschließend Einstellen der langen Schraube (25) desMontagebasissockels, Einrasten der an dem Aufhängungsdraht-Montagekasten befindlichen "L"-förmigen Öffnungen (41) an der langen Schraube (25) des Montagebasissockels und somit Abschließen der Verbindung zwischen dem Aufhängungsdraht-Montagekasten (4) und dem Montagebasissockel (2).

## Revendications

1. Lampe à double usage d'aspiration et suspension, comprenant une partie émettrice de lumière (1), un boîtier de bas de montage (2), un boîtier de montage de ligne suspendue (4), et un boîtier de montage de paroi de mur (3), **caractérisée en ce que**, la partie émettrice de lumière (1) comprend un abat-jour (11) dans lequel sont prévus, en séquence, une carte de circuit imprimé, un tableau de contrôle, et un support de lampe, des deux extrémités de l'abat-jour (11) étant scellées par un embout, un trou fileté (16) qui est fixé avec le boîtier de montage de paroi de mur et le boîtier de montage de ligne suspendue et une interface électriques (17) qui est électriquement connectée avec le boîtier de montage de ligne suspendue et le boîtier de montage de paroi de mur étant prévus de part et d'autre d'une extrémité supérieure de l'abat-jour (11), le boîtier de bas de montage (2) étant prévu d'un poste de reliure (21) électriquement connecté avec un dispositif d'entrainement (22), le dispositif d'entrainement (22) étant fixé au boîtier de bas de montage (2) au moyen d'une couverture d'entrainement (23), des deux extrémités du boîtier de bas de montage (2) étant prévues d'un trou traversant (24) fixé à une paroi de mur, un vis long (25) pour monter le boîtier de montage de paroi de mur (3) et le boîtier de montage de ligne suspendue (4) étant fixé de part et d'autre du boîtier de bas de montage (2).

2. Lampe à double usage d'aspiration et suspension selon la revendication 1, **caractérisée en ce que**, le boîtier de montage de paroi de mur (3) est prévu de quatre ouvertures en forme de L (31) de manière correspondante de part et d'autre, le boîtier de bas de montage (2) est fixé au boîtier de montage de paroi de mur (3) au moyen du vis longue (25) et les ouvertures en forme de L (31), le fond du boîtier de montage de paroi de mur (3) est prévu d'un trou de montage (32) qui corresponde au trou fileté (16) à l'extrémité supérieure de l'abat-jour (11) et une ouverture (33) qui correspond à l'interface électrique (17) à l'extrémité supérieure de l'abat-jour, et le dispositif d'entrainement (22) dans le boîtier de bas de montage est électriquement connecté au tableau de contrôle (13) dans l'abat-jour (11) via l'ouverture (33).

3. Lampe à double usage d'aspiration et suspension selon la revendication 1, **caractérisée en ce que**, le boîtier de montage de ligne suspendue(4) est prévu de quatre ouvertures en forme de L (41) de manière correspondante de part et d'autre, le boîtier de bas de montage (2) est fixé au boîtier de montage de ligne suspendue (4) au moyen du vis longue (25) et les ouvertures en forme de L (41), une ligne de connexion est fixée de part et d'autre du boîtier de montage de ligne suspendue (4), une autre extrémité de la ligne de connexion est fixée au trou fileté (16) à l'extrémité supérieure de l'abat-jour, un tableau de câblage (43) est en outre monté dans le boîtier de montage de ligne suspendue (4), une section du tableau de câblage (43) est connectée au dispositif d'entrainement (22), et une autre extrémité est connectée au tableau de contrôle (13) dans l'abat-jour.

4. Lampe à double usage d'aspiration et suspension selon la revendication 3, **caractérisée en ce que**, le tableau de câblage est une borne de câblage à terminal mâle et femelle.

5. Lampe à double usage d'aspiration et suspension selon la revendication 3, **caractérisée en ce que**, le connecteur comprend un enfile-cartes (44), un câble d'acier (45), et un accessoire de connexion (46).

6. Lampe à double usage d'aspiration et suspension selon la revendication 1 ou 2 ou 3 ou 4 ou 5, **caractérisée en ce que**, un anneau anti-poussière est fixé à l'interface électrique (17) à l'extrémité supérieure de l'abat-jour.

7. Procédé de monter une lampe à double usage d'aspiration et suspension à une paroi de mur, **caractérisé en ce qu'**il comprend les étapes suivantes:
a. visser un boîtier de bas de montage (2) à la paroi de mur au moyen d'un vis via un trou traversant;
b. fixer un boîtier de montage de paroi de mur (3) à une partie émettrice de lumière (1) au moyen d'un vis;
c. finalement, ajuster un vis longue (25) du boîtier de bas de montage, et emboîter un ouverture en forme de L (31) sur le boîtier de montage de paroi de mur sur le vis longue (25) du boîtier de bas de montage, réalisant la connexion entre le boîtier de montage de paroi de mur (3) et le boîtier de bas de montage (2).

8. Procédé de monter une lampe à double usage d'aspiration et suspension par suspension d'un plafond, **caractérisé en ce qu'**il comprend les étapes suivantes:
a. visser un boîtier de bas de montage (2) au plafond au moyen d'un vis via un trou traversant;
b. fixer un boîtier de montage de ligne suspendue (4) à une partie émettrice de lumière (1) au moyen d'un câble d'acier (45), un enfile-cartes (44), et un accessoire de connexion (46);
c. finalement, ajuster un vis longue (25) du boîtier de bas de montage, et emboîter un ouverture en forme de L (41) sur boîtier de montage de ligne suspendue (4) sur le vis longue (25) du boîtier de bas de montage, réalisant la connexion entre le boîtier de montage de ligne suspendue (4) et le boîtier de bas de montage (2).
